# EUROPÄISCHE PATENTANMELDUNG

(11) **EP 0 662 623 A1**
(43) Veröffentlichungstag der Anmeldung: **12.07.1995**
(21) Anmeldenummer: 94120908.2
(22) Anmeldetag: 29.12.1994
(51) Int. Cl.: G02B 6/44

(54) **Spule für Lichtwellenleiter, optische Kabel oder Leitungen**

(30) Priorität: 11.01.1994 DE 4400573
(71) Anmelder: Siecor Fertigungsgesellschaft für Lichtwellenleiter m.b.H. & Co. KG, D-96465 Neustadt/Coburg (DE)
(72) Erfinder: Stein, Detlev, D-96465 Neustadt (DE)
(74) Vertreter: Fuchs, Franz-Josef, Dr.-Ing.

(57) **Zusammenfassung**

Bei der Erfindung handelt es sich um eine Spule (S) für Lichtwellenleiter, optische Kabel oder Leitungen mit einer zwischen zwei Wickelkammerrändern (WKR) eingeschlossenen Wickelkammer (WK). Ein Wickelkammerrand (WKR) enthält für die Durchführung des inneren Endes des aufgewickelten Kabels oder der Leitung ein kreisbogenförmiges Langloch (L). Infolge der Durchführung im Langloch (L) wird der minimal zulässige Biegeradius der optischen Elemente des Kabels bzw. der Leitung nicht unterschritten, so daß keine Bruchgefahr besteht und Messungen nicht ungebührlich behindert werden.. Das durchgeführte Ende des Kabels bzw. der Leitung wird auf der Außenseite in einer Ringnut (RN) geführt und fixiert. Auf diese Weise ist eine ausreichende Anschlußlänge Für Messungen am Lichtwellenleiter im aufgewickelten Zustand in geschützter Weise zugänglich.

## Beschreibung

Die Erfindung betrifft eine Spule für Lichtwellenleiter, optische Kabel oder Leitungen mit einer zwischen zwei Wickelkammerrändern eingeschlossenen Wickelkammer.

Aus der deutschen Patentschrift 40 24 619 ist eine Spule für konfektionierte optische Kabel oder Leitungen bekannt, bei der zwischen den Außenflanschen ein weiterer Flansch angeordnet ist, so daß eine zweite Kammer gebildet ist. In dieser zweiten Kammer können nun die Konfektionierungsteile, wie zum Beispiel Steckerteile usw., aufbewahrt werden. Für nicht konfektionierte optische Kabel oder Leitungen ist jedoch eine derartige Ausführungsform zu aufwendig, da für das innen liegende Kabel- oder Leitungsende kaum Platz benötigt wird.

Aufgabe der vorliegenden Erfindung ist nun, eine Spule für nicht konfektionierte optische Kabel oder Leitungen zu schaffen, bei der das innere Kabel- oder Leitungsende in einfacher und unprobleamtischer Weise zugänglich ist, wobei die Biegeempfindlichkeit der optischen Elemente zu berücksichtigen ist.

Die gestellte Aufgabe wird nun mit einer Spule der eingangs erläuterten Art dadurch gelöst, daß ein Nutflansch auf einer äußeren Spulenstirnseite angeordnet ist, daß zwischen dem Nutflansch und der Spulenstirnfläche eine Ringnut gebildet ist, die in der Breite und Höhe so bemessen ist, daß das optische Kabel oder die Leitung aufgenommen werden kann, daß ein sich in Umfangrichtung erstreckendes, vom Grund der Wickelkammer zur Ringnut führendes Langloch angeordnet ist, daß die Länge des Langloches zur Durchführung des optiscvhen Kabels oder der Leitung auf den Mindestbiegeradius des optischen Kabels oder der Leitung abgestimmt ist und daß mindestens ein Ausführungsschlitz im Ringnutrand angeordnet ist.

Die Vorteile der Spule gemäß der Erfindung liegen nun gegenüber dem Stand der Technik in erster Linie darin, daß das innere Ende des optischen Kabels oder der Leitung durch ein im Wickelkammerrand eingebrachtes, vorzugsweise kreisförmig verlaufendes Langloch am Grunde der Wickelkammer nach auswärts geführt werden kann, wobei durch die entsprechende Länge des Langloches gewährleistet wird, daß die Durchführung ohne Bruchgefahr für die optischen Elemente des Kabels oder der Leitung erfolgen kann. Der Übergang durch den Wickelkammerrand hindurch erfolgt dabei so, daß der minimal zulässige Biegeradius der optischen Elemente nicht unterschritten wird. Die Durchführung ist so gestaltet, daß Faserdämpfung nur unwesentlich ansteigt und damit Kontrollmessungen nicht behindert werden. Ferner ist von Vorteil, daß das hindurchgeführte Ende des Kabels oder der Leitung in einer Ringnut gehalten und fixiert wird, so daß für den Anschluß an ein Meßgerät genügend Anschlußlänge vorhanden ist, die während der Messungen ohne Schwierigkeiten aus der Ringnut entnommen werden kann. Außerdem sind in dem Nutrand der Ringnut noch Ausführungsschlitze angeordnet, die eine seitliche Ausführung des Kabels oder der Leitung ermöglichen. Diese Schlitze verlaufen in einem spitzen Winkel zum Radius der Spule, so daß auch hier eine gefährdende Abwinkelung des Kabels oder der Leitung nicht erfolgen kann.

Die Spule gemäß der Erfindung wird nun anhand eines Ausführungsbeispiels in zwei Figuren näher erläutert.
- Figur 1: zeigt die stirnseitige Ansicht der Spule.
- Figur 2: zeigt einen Längsschnitt durch die Spule.

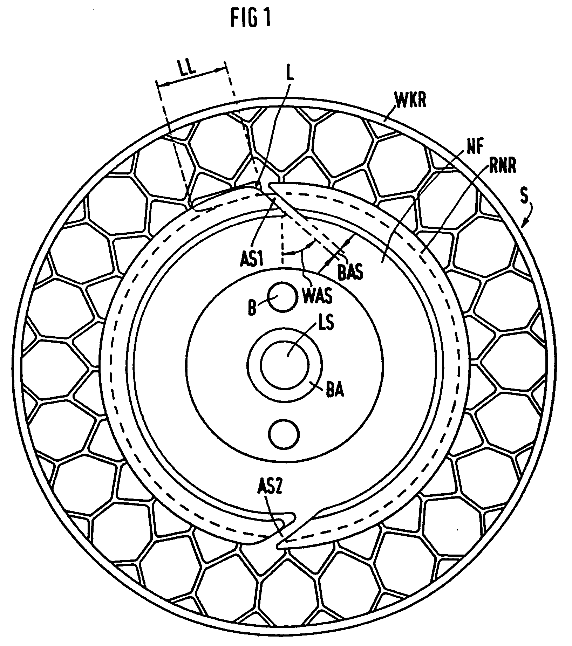

In Figur 1 ist die Spule S in der stirnseitigen Ansicht dargestellt, wobei erkennbar ist, daß der Wickelkammerrand WKR auf der Außenseite durch rautenförmige Rippen in der üblichen Weise verstärkt ist. Im Zentrum der Spule S befindet sich der Nutflansch NF, der mit dem stirnseitigen Wickelkammerrand WKR und seinem Ringnutrand RNR die Ringnut RN bildet. Der Nutgrund der Ringnut RN befindet sich in der Höhe des im Wickelkammerrand WKR befindlichen Langloches L, so daß die Überführung des Kabels oder der Leitung stufenlos erfolgt. Außerdem ist im Anschluß an das Langloch L in dem Ringnutrand RNR ein Ausführungsschlitz AS1 angeordnet, der unter einem spitzen Winkel WAS, vorzugsweise 47^{o}, zum Radius der Spule verläuft. Es ist zum Beispiel noch ein zweiter Ausführungsschlitz AS2 vorgesehen, der jedoch zum ersten Ausführungsschlitz AS1 entgegengesetzt verläuft, so daß die Ausführung des Kabels oder der Leitung aus der Ringnut RN in beiden Wickelrichtungen erfolgen kann. Die Schlitzbreite BAS beträgt vorzugsweise 4 mm und die Länge des Langloches L vorzugsweise 32,6 mm. Der Nutflansch NF kann als separates Bauteil auf der Stirnseite der Spule S angesetzt und befestigt werden, wobei die Klebung bevorzugt ist. Der Nutflansch NF kann jedoch auch an die Spule S fest mit angeformt sein, so daß keine zusätzliche Montage mehr anfällt. Im Zentrum der Spule S sind in an sich bekannter Weise in Längsrichtung verlaufende Lagerstutzen LS mit einer Bohrungsanschrägung BA, sowie weiteren Befestigungsbohrungen B angeordnet.

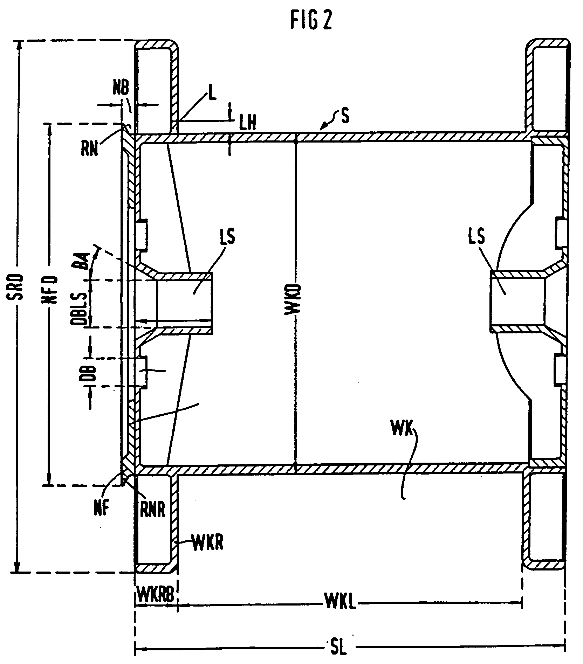

Der in Figur 2 aufgezeigte Längsschnitt durch die Spule S gemäß der Erfindung zeigt deutlich die Ringnut RN, die zwischen einem stirnseitigen Wickelkammerrand WKR und dem Nutflansch NF gebildet ist, wobei hier der vom Nutflansch NF gebildete Ringnutrand RNR zum Beispiel abgeschrägt ist. Außerdem wird die Durchführung in Form des Langloches L am Grunde der Wickelkammer WK deutlich erkennbar, wobei der Grund der Ringnut RN auf gleichem Niveau liegt. Die Höhe LH des Langloches L beträgt vorzugsweise 6 mm, wie auch die Nutbreite NB der Ringnut RN. Weitere typische Maße für eine Ausführungsform einer Spule S gemäß der Erfindung sind imfolgenden zusammengestellt.

| | |
|---|---|
| Spulenlänge SL - | 200 mm |
| Wickelkammerlänge WKL - | 160 mm |
| Innerer Wickelkammerdurchmesser WKD - | 160 mm |
| Spulenranddurchmesser SRD - | 250 mm |
| Nutflanschdurchmesser NFD - | 170 mm |
| Durchmesser der Bohrung des Lagerstutzens DBLS | 22 mm |
| Länge des Lagerstutzens LS - | 36 mm |
| Abschrägung des Lagerstutzens BA - | 30^{o} |
| Durchmesser der Befestigungsbohrungen DB - | 13 mm |

Selbstverständlich sind auch andere Spulenmaße möglich, da die eigentlichen erfinderischen Merkmale von diesen Maßen nicht abhängig sind.

## Patentansprüche

1. Spule für Lichtwellenleiter, optische Kabel oder Leitungen mit einer zwischen zwei Wickelkammerrändern eingeschlossenen Wickelkammer,
**dadurch gekennzeichnet,**
daß ein Nutflansch (NF) auf einer äußeren Spulenstirnseite angeordnet ist, daß zwischen dem Nutflansch (NF) und der Spulenstirnfläche eines Wickelkammerrandes (WKR) eine Ringnut (RN) gebildet ist, die in der Breite (NB) und Höhe (LH) so bemessen ist, daß das optische Kabel oder die Leitung aufgenommen werden kann, daß ein sich in Umfangsrichtung erstrekkendes, vom Grund der Wickelkammer (WK) zur Ringnut (RN) führendes Langloch (L) angeordnet ist, daß die Länge (LL) des Langloches (L) zur Durchführung des optischen Kabels oder der Leitung auf den Mindestbiegeradius des optischen Kabels oder der Leitung abgestimmt ist, und daß mindestens ein Ausführungsschlitz (AS1, AS2) im Ringnutrand (RNR) angeordnet ist.

2. Spule nach Anspruch 1,
**dadurch gekennzeichnet,**
daß der Nutflansch (NF) an der Stirnseite eines Wickelkammerrandes (WKR) angeformt ist.

3. Spule nach Anspruch 1,
**dadurch gekennzeichnet,**
daß der Nutflansch (NF) als separates Element an der Stirnseite eines Wickelkammerrandes (WKR) befestigt ist, vorzugsweise durch Klebung.

4. Spule nach einem der vorhergehenden Ansprüche,
**dadurch gekennzeichnet,**
daß der Ausführungsschlitz (AS1) in Wickelrichtung des optischen Kabels oder der Leitung unter einem spitzen Winkel. (WAS), vorzugsweise unter 47^{o}, zum Radius der Spule (S) verläuft.

5. Spule nach Anspruch 4,
**dadurch gekennzeichnet,**
daß ein weiterer, zum ersten Ausführungsschlitz (AS1) gegenläufiger Ausführungsschlitz (AS2) angeordnet ist.

6. Spule nach einem der vorhergehenden Ansprüche,
**dadurch gekennzeichnet,**
daß das Langloch (L) im Wickelkammerrand (WKR) kreisbogenförmig verläuft und eine Länge von vorzugsweise 32,6 mm und eine dem Durchmesser des aufgewickelten Kabels oder der Leitung entsprechende Höhe (LH) aufweist.
